# EUROPEAN PATENT APPLICATION

(11) **EP 1 484 760 A1**
(43) Date of publication of application: **08.12.2004**
(21) Application number: 03012525.6
(22) Date of filing: 02.06.2003
(51) Int. Cl.: G11B 20/10, H04L 25/03

(54) **A method for reading a recorded signal from an optical medium**

(71) Applicant: DEUTSCHE THOMSON-BRANDT GMBH, 78048 Villingen-Schwenningen (DE)
(72) Inventor: Timmermann, Friedrich, 30823 Garbsen (DE); Theis, Oliver, 32689 Kalletal (DE)
(74) Representative: Thies, Stephan

(57) **Abstract**

The present invention relates to a method for reading a recorded signal from an optical medium, the method comprising the steps of:
- providing a discrete read signal,
- filtering the discrete read signal by means of a Volterra filter,
- Viterbi decoding the filtered read signal to provide a bit stream,
- adapting filter coefficients of the Volterra filter on the basis of the bit stream and the filtered discrete signal.

## Description

The present invention relates to the reading of signals which are recorded on an optical recording medium, and more particularly without limitation, to the compensation of non-linear signal distortions.

A recording on an optical recording medium can have asymmetries and/or other non-linear distortions due to various reasons.

US 2002/0060596 A1 shows a method for selective disturbance compensating of a signal which is reproduced from an optical recording medium. This method is based on DC-offset cancellation. A disadvantage of this method is that no higher order distortions are removed.

The present invention aims to provide an improved method for reading a recorded signal from an optical recording medium as well as a corresponding computer program product and electronic device.

The present invention provides for a method for reading a recorded signal from an optical recording medium, whereby the discrete read signal is filtered by means of a Volterra filter. For example, a Volterra adaptive polynomial filter is used having filter kernels of order 0, 1 and 2. This way the Volterra filter can remove constant, linear and quadratic distortions in the discrete read signal. A Volterra series allows to describe non-linear behaviour, whereas all components of the series are linear. This has the advantage that well-known calculation methods can be used. However, due to the hardware effort Volterra filters have not yet been considered for filtering of the signals obtained from optical recording media.

The Volterra filtered discrete read signal is then decoded by means of a Viterbi decoder to provide a decoded bit stream. The filter coefficients of the Volterra filter are adapted on the basis of the bit stream and the filtered discrete signal.

For example, the bit stream is filtered by means of a so-called target filter. The target filter is a filter which models the transmission function of an idealised channel. The output of the target filter and the output of the Volterra filter are subtracted, which provides a control signal for the adaptation of the Volterra filter coefficients.

A particular advantage of using a Volterra filter having constant, linear and quadratic filter kernels is that this enables to remove asymmetries which are caused by domain bloom. Domain bloom results from under- or over-etching of the marks on the optical recording medium due to non-optimal laser power control.

The effect of domain bloom is that the marks on the optical recording medium become systematically too short or too long. During reproduction of the recorded signal, this leads to an asymmetry in the read signal, since especially the short run-length components experience a DC-offset. Volterra filtering provides an efficient way to remove this kind of asymmetry for reliable data reproduction and clock recovery.

In accordance with a preferred embodiment of the invention the control signal for the Volterra filter is monitored in order to detect abrupt changes. When such an abrupt change occurs it takes some time until the Volterra filter coefficients have settled. When the adaptive filter coefficients of the Volterra filter have not settled this corresponds to a high bit-error rate.

When such a situation is detected a fixed coefficient finite impulse response (FIR) filter is used temporarily as a replacement for the Volterra filter until the Volterra filter coefficients have settled.

In the following preferred embodiments of the invention are described in greater detail by making reference to the drawings in which:
Figure 1 is a block diagram of an electronic device for reading from an optical recording medium,
Figure 2 is a block diagram of a Volterra filter,
Figure 3 is a block diagram of a further preferred embodiment of the electronic device.

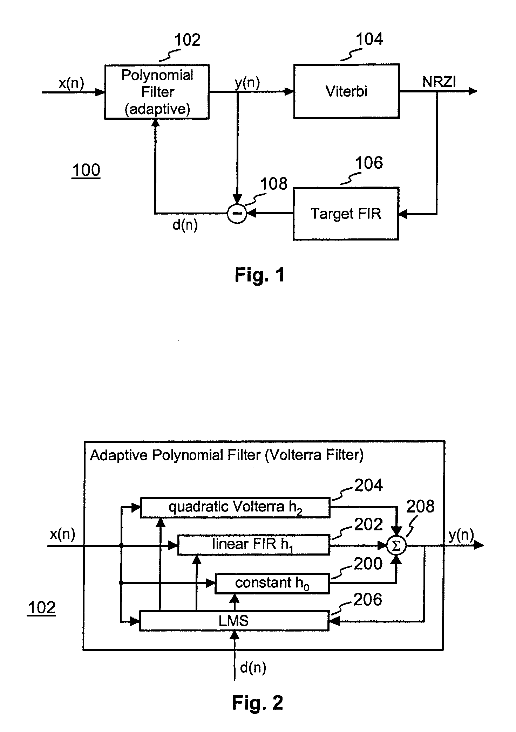

Figure 1 shows a block diagram of an electronic device 100 for reading from optical recording media. The electronic device 100 can, for example, be part of an apparatus for reading from and/or writing to an optical recording medium, such as a bluray disc. However, the invention is not limited to optical recording media and can also be applied to other types of recording media.

The electronic device 100 has a Volterra filter 102, which is an adaptive polynomial filter. The Volterra filter 102 receives at its input a discrete read signal x(n). The discrete read signal x(n) is a sampled output signal of a sensor (not shown) of the apparatus 100.

The output of the Volterra filter 102 is connected to the input of a Viterbi decoder 104. The Viterbi decoder 104 outputs a signal NRZI, which is a bit stream.

For adapting the filter coefficients of the Volterra filter 102 a feedback path is provided. The feedback path includes a target filter 106, which models an ideal channel transmission function. The target filter 106 is a fixed coefficient finite impulse response (FIR) filter.

The signal NZRI is inputted into the target filter 106. The output of the target filter 106 is subtracted from the output of the Volterra filter 102, which is a signal y(n), by a subtractor 108. The subtractor 108 provides a control signal d(n), which is inputted into a control input of the Volterra filter 102.

In operation the Volterra filter 102 compensates non-linear signal disturbances in the discrete read signal x(n), in particular non-linear signal disturbances of second order, which are induced by domain bloom or non-linearities of the optical sensor. The compensation of these non-linearities enables a more accurate reproduction of the original signal.

Figure 2 shows a block diagram of an example of a Volterra filter 102, which has constant, linear and quadratic filter kernels, i.e. a filter module 200 for the constant kernel hₒ, a filter module 202 for the linear filter kernel h₁, and a filter module 204 for the quadratic filter kernel h₂. Further the Volterra filter has an adaptation module 206 for adaptation of the filter coefficients of the filter modules 200, 202 and 204. For example, the adaptation module 206 is implemented by means of a least mean square (LMS) algorithm.

The discrete read signal x(n) is coupled to the filter modules 200, 202, 204 and 206. The outputs of the filter modules 200, 202 and 204 are added by an adder 208 to provide the output signal y(n).

The adaptation module 206 receives the discrete read signal x(n), the output signal y(n) and the control signal d(n) as input signals for the LMS algorithm. The outputs of the adaptation module 206 are coupled to respective control inputs of the filter modules 200, 202 and 204 for adaptation of the respective filter parameters in accordance with the result of the LMS algorithm of the adaptation module 206.

Since quadratic distortions prevail in optical channels and in order to limit the computational complexity, the Volterra filter 102 of figure 2 does not have higher order kernels. However, it is to be noted that the present invention is not limited to Volterra filters having constant, linear and quadratic filter kernels, but that Volterra filters having additional higher order kernels can also be used.

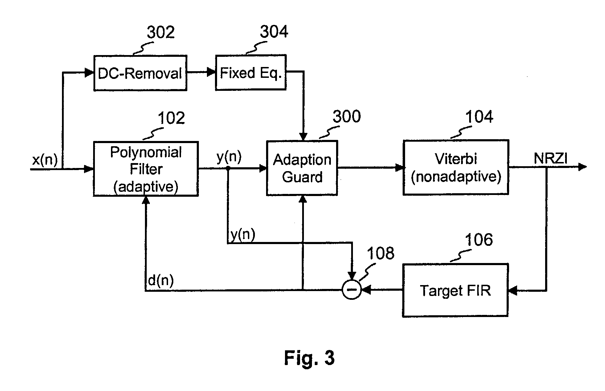

Figure 3 shows an alternative implementation of the electronic device 100. Like elements in figures 1 and 3 are designated by the same reference numerals. In addition to the preferred embodiment of Figure 1 there is an adaptation-guard module 300 in the embodiment of Figure 3. The adaptation-guard module 300 receives the control signal d(n) in order to monitor the bit-error-rate. For example, the adaptation-guard module 300 has a rising-edge detector in order to detect a rising edge of the control signal d(n), which would indicate that the filter coefficients of the Volterra filter 102 are unsettled.

In addition to the Volterra filter 102 the apparatus 100 of Figure 3 has a DC removal filter 302 and a fixed equalizer 304. In contrast to the Volterra filter 102, the fixed equalizer 304 has fixed filter coefficients.

In operation the adaptation-guard module 300 is transparent for the signal y(n), i.e. the signal y(n) passes unaltered through the adaptation-guard module 300 and is inputted into the Viterbi decoder 104. When the adaptation-guard module 300 detects a situation where the filter coefficients of the Volterra filter 102 are unsettled, i.e. a rising edge of the control signal d(n) which surpasses a certain threshold, the adaptation-guard module 300 switches to the output of the fixed equalizer 304 as a replacement for the signal y(n). This way the Volterra filter 102 is temporarily replaced by the filters 302 and 304 in order to bridge the time required for settling of the Volterra filter coefficients.

## Claims

1. A method for reading a recorded signal from a recording medium, the method comprising the steps of:
- providing a discrete read signal,
- filtering the discrete read signal by means of a Volterra filter,
- Viterbi decoding the filtered read signal to provide a bit stream,
- adapting filter coefficients of the Volterra filter on the basis of the bit stream and the filtered discrete signal.

2. The method of claim 1, further comprising the steps of:
- filtering the bit stream by means of a target filter,
- subtracting the filtered bit stream and the filtered discrete read signal to provide a control signal for the Volterra filter.

3. The method of claim 1 or 2, whereby the Volterra filter has constant, linear and quadratic filter kernels.

4. The method of claim 2 or 3, further comprising the steps of:
- monitoring the control signal to detect an increase of a bit-error-rate,
- filtering the discrete read signal by means of a fixed coefficient finite impulse response filter instead of the Volterra filter if an increase of the bit-error-rate is detected.

5. An electronic device for reading a recorded signal from a recording medium, the electronic device comprising:
- sensor means for providing a discrete read signal,
- Volterra filter means (102) for filtering the discrete read signal,
- Viterbi filter means (104) for decoding the filtered discrete read signal to provide a bit stream,
- a feedback path (106; 108) for adapting the Volterra filter coefficients on the basis of the bit stream and the filtered discrete read signal.

6. The electronic device of claim 5, further comprising:
- target filter means (106) for filtering the bit stream,
- subtractor means (108) for subtracting the filtered bit stream and the filtered discrete read signal to provide a control signal for the Volterra filter means.

7. The electronic device of claims 5 or 6, the Volterra filter means having constant, linear and quadratic filter kernels.

8. The electronic device of claims 5, 6 or 7, further comprising:
- alternative fixed coefficient finite impulse response filter means (304) for filtering the discrete read signal,
- selection means (300) for selecting the Volterra filter means or the finite impulse response filter means for filtering the discrete read signal, the selection means being adapted to perform the selection on the basis of a bit-error-rate.

9. The electronic device of claim 8, the selection means being adapted to perform the selection on the basis of a control signal for the Volterra filter coefficients.

10. The electronic device of claim 9, the selection means being adapted to detect an edge of the control signal.

11. Apparatus for reading from and/or writing to optical recording media, **characterized in that** it performs a method according to one of claims 1 to 4 or comprises an electronic device according to one of claims 5 to 10 for reading a recorded signal from a recording medium.
